# EUROPEAN PATENT APPLICATION

(11) **EP 2 050 872 A1**
(43) Date of publication of application: **22.04.2009**
(21) Application number: 08016662.2
(22) Date of filing: 23.09.2008
(51) Int. Cl.: E01C 11/24

(54) **Shock-resistant and/or antislip member, particularly for structures for supporting parts or for covering walking areas, and manufacturing method thereof**

(30) Priority: 25.09.2007 IT TO20070669
(71) Applicant: R.P. Rivestimenti Plastici S.r.l., 10078 Venaria (TO) (IT)
(72) Inventor: Pennazio, Rinaldo, 10088 Volpiano (Torino) (IT)
(74) Representative: Cian, Paolo

(57) **Abstract**

A shock-resistant and/or antislip member, particularly for structures for supporting parts or for covering pavements, comprises a support body (12; 12a), and a substantially elastic layer of plastics (14) applied to the support body (12; 12a). The layer of plastic material (14) has an outer shaped surface which includes a relatively thin and substantially flat base portion (16) from which a series of projections (18; 18a; 18b) protrude.

## Description

The present invention relates in general to members having a shock-resistant and/or antislip function, which can be used for example to cover bars or plates of pallet structures for supporting and transporting parts, such as portions of motor vehicle bodies, in the zones in which such parts rest, with the aim of preventing the surface of the parts, usually already painted, to be damaged both during their insertion into seats provided in the pallets or during their carriage, owing to accidental impacts or scrapings.

In particular, the invention relates to a shock-resistant and/or antislip member of the type defined in the preamble of appended claim 1.

Known shock-resistant and/or antislip members of the type defined above, comprise a covering plastic layer, typically a PVC based vinyl layer, evenly distributed, and having therefore a constant thickness, on a support sheet. This covering layer has good elasticity characteristics which allow, for example, to absorb in a usually satisfactory manner impacts or small movements to which the parts may be subject to during their handling.

However, the layer of plastics distributed evenly and with a constant thickness, makes the whole member expensive to be manufactured, because the cost of the plastics prevails with respect to that of the support sheet, and makes complex the disposal step, when such members have to be eliminated as a result of their replacement, because the plastic covering layer is not biodegradable and therefore the disposal thereof is more expensive the higher its volume is.

Moreover, the even plastic covering layer of these members is little adapted to allow to fasten them by rivets on the pallet or work bench structure since, owing to the relatively high thickness, it is not always possible to pierce it only by means of the rivets, so that the execution of a preliminary drilling step may be necessary, that would be desirable to avoid. Besides this, the heads of the rivets used for fastening the shock-resistant and/or antislip members to the pallet structure, may project from the outer surface of the plastic covering, so that they may constitute non-deformable zones which could damage the parts which rest accidentally on them.

In order to solve these drawbacks, the subject of the invention is a shock-resistant and/or antislip member as claimed.

By virtue of this idea of solution, the shock-resistant and/or antislip members according to the invention are more economical to be manufactured than the previously known members, since they comprise a reduced amount of plastics, which makes also the disposal step less burdensome when such members have to be replaced. The shape of the layer of plastics of the shock-resistant and/or antislip members of the invention allows also to make their fastening by rivets easier, for example to fasten them on structural members of pallets for carrying parts or on work bench platforms, for example to support engines or other devices during their assembly, since the rivets can be applied in the zones of the layer of plastics which are interposed between the projections, and therefore at the base portion thereof which has a thin thickness, which is easy to be pierced only by the action of the riveting machine, avoiding at the same time the rivet heads may project outside the outer support surface of the plastic covering, since the rivets are arranged in the zones interposed between the projections.

The shock-resistant and/or antislip member of the invention may also be used for covering walking areas such as floors because, thanks to the reduced thickness zones arranged between the projections of the plastic covering, it may be easily folded particularly along lines intermediate between the projections, in order to be fitted to corners or bending zones of the walking areas, so that also covering of non-flat surfaces such as steps or joint zones with vertical walls is allowed.

The invention relates also to a manufacturing method of a shock-resistant and/or antislip member according to the invention.

Further characteristics and advantages of the invention will be more clear from the following detailed description, provided as a non-limitative example and referred to the appended drawings in which:
figure 1 is a perspective view of a part of a member according to the invention which includes a support sheet, a portion of which being enlarged in order to emphasize its structure,
figure 2 is a perspective view of a part of an element according to the invention which includes a support box section,
figures 3 to 5 are similar top elevational views which show possible configurations of the projections of the layer of plastics of the element of the invention, and

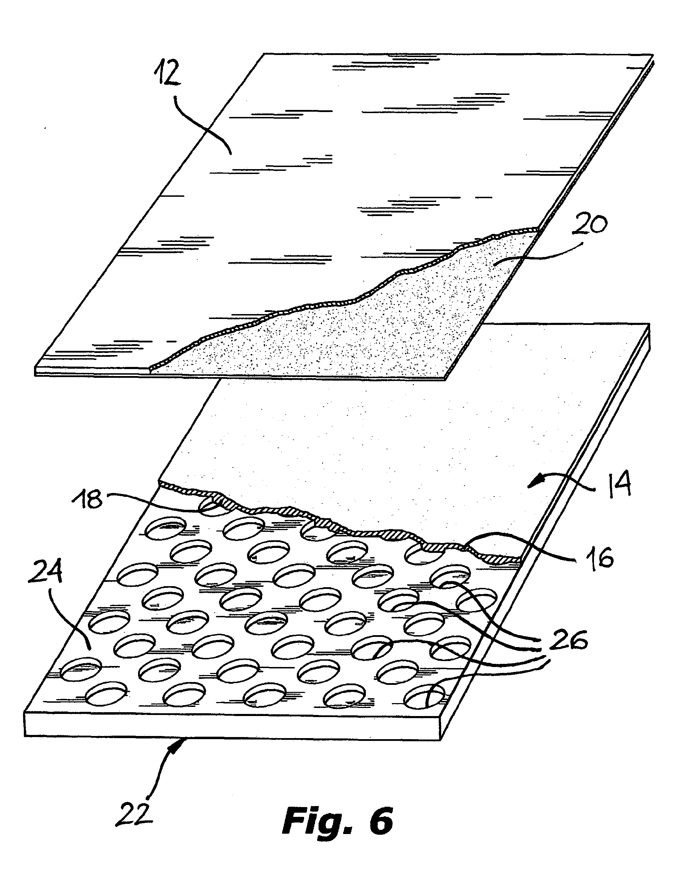

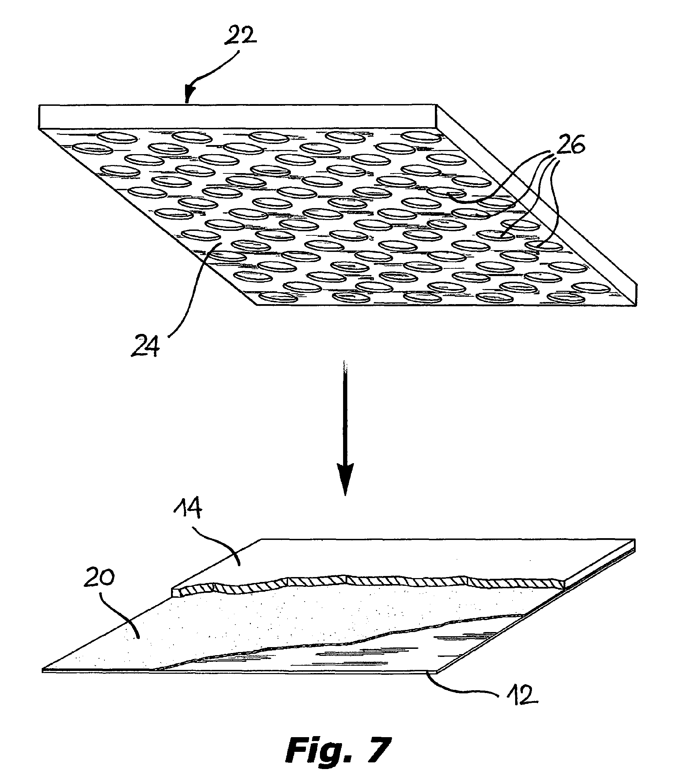

figures 6 and 7 are similar perspective views, each of which shows schematically a manufacturing method of the member of the invention.

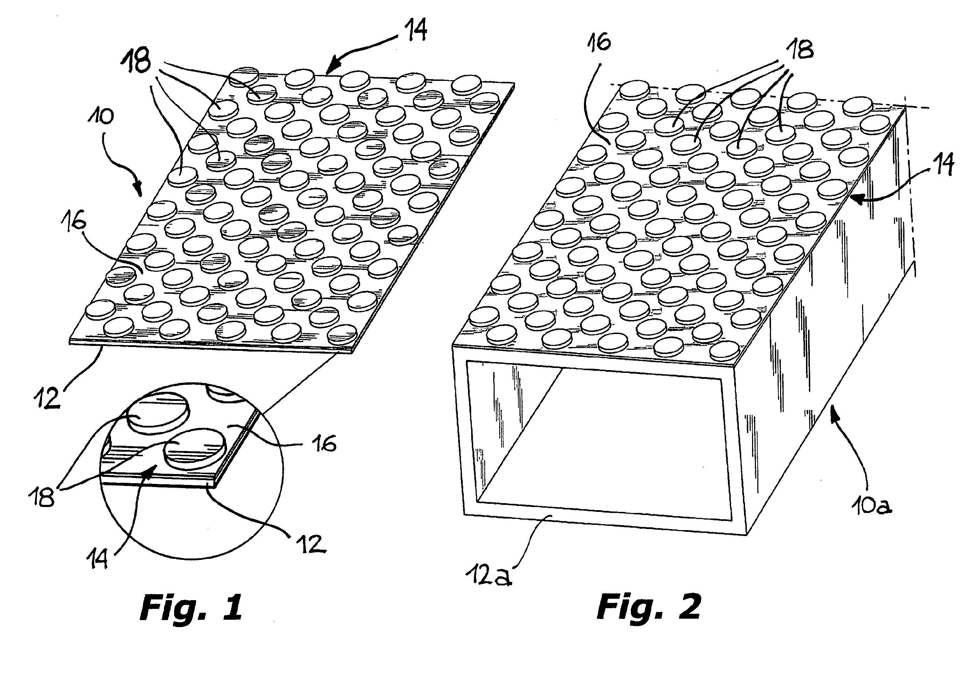

With initial reference to figures 1 and 3 to 5, a shock-resistant and/or antislip member according to the invention is indicated 10 in its whole. The member 10 may be used, for example, for covering structural members of pallet for carrying parts, or zones of work benches intended for assemblying engines or other devices, or for covering walking areas such as floors or resting surfaces of vehicles such as footboards.

The member 10 comprises a support body, shown in figure 1 as a flat metallic sheet 12, usually of the galvanized type, having a substantially even thickness, for example a thickness in the range of 0.5 and 3 mm. The sheet 12 may be also provided with a series of holes or slots (not shown in the figures), in which case it preferably consists of a stretched sheet.

A layer of substantially elastic plastics 14 is formed on the sheet 12, which conveniently consists of a vinylic material made of PVC, typically having a hardness in the range of about 25 and 90 Shore. The layer 14 has preferably a whole thickness which is higher than that of the sheet 12, for example a thickness in the range of 3 and 20 mm.

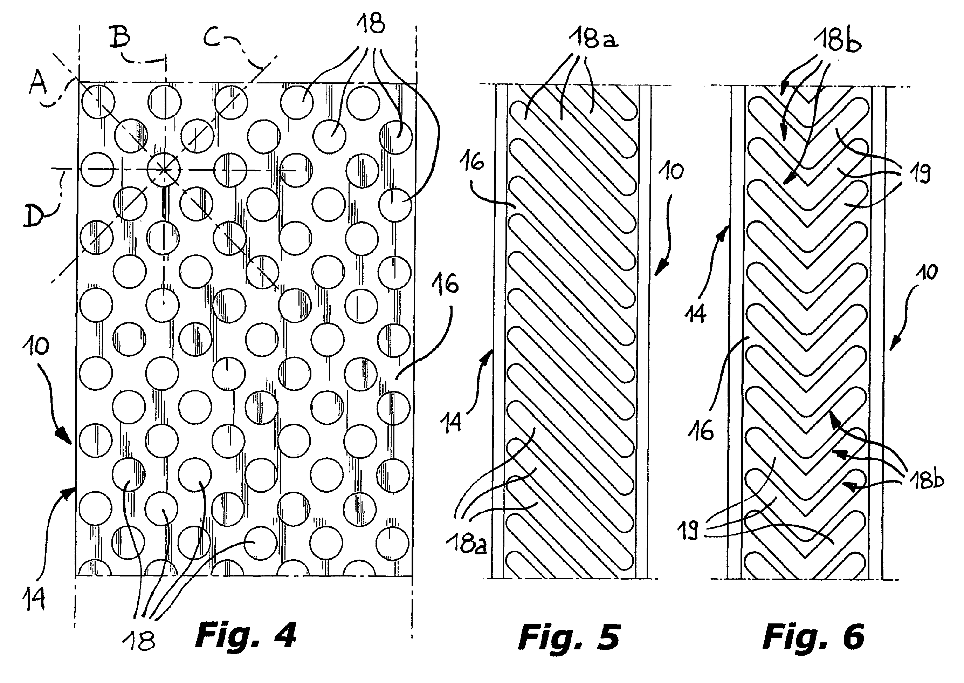

The outer surface of the layer 14 is so shaped as to have a substantially flat and thin base portion 16 from which a series of projections protrude. For example, the projections of the layer 14 may be disc-shaped elements 18 (figures 1 and 4) which extend from the layer 14 with a thickness higher then the thickness of the base portion 16, the overall thickness of the layer 14 being equal or greater than that of the sheet 12.

As an alternative, the projections protruding from the base portion 16 of the layer 14, may be bar-shaped elements 18a with their ends rounded off (figure 4), or V-shaped elements 18b with their ends and apexes rounded off (figure 5), each projection 18b comprising a pair of branches 19 consisting of respective diverging bars. Of course, the projections of the layer 14 may also have configurations different from those here shown, in order to satisfy different use conditions, for example they may be shaped according to a series of undulations of various shape and thickness.

The projections of the layer of plastics 14 are conveniently arranged according to an ordered series. In the case of the disc-shaped projections 18, they are arranged along straight rows which extend along intersecting lines which are schematically indicated A, B, C and D in figure 3, while in the case of the bar-shaped projections 18a they are parallel to each other. The V-shaped projections 18b are arranged with their branches 19 parallel to the branches 19 of the adjacent projections 18b.

By virtue of the ordered arrangement of the projections, particularly with reference to the disc-shaped projections 18 and the bar-shaped projections 18a, the operation of bending the member 10 along lines which are intermediate between the rows of projections 18 or 18a is made easier, which is particularly useful when shaping of the member 10 is required in order to fit it to a non-flat surface such as a shaped area of a floor or a pallet for carrying parts.

According to a modification shown in figure 2, the support body is a hollow metallic box section 12a having a generally rectangular cross-section, on a face of which the above described layer of plastics 14 is applied. This modification is fit for manufacturing members 10a which are adapted to be fastened to the structure of a pallet (not shown) for carrying parts according to particular positions and purposes.

The manufacturing of the member 10 or 10a may be accomplished by using any one of the two preferred methods described in the following.

According to a first method, firstly a support body, typically of a metallic material, such as a sheet 12 or a hollow box section 12a (only a sheet 12 being shown as an example), is prepared, and a layer of primer 20 is applied on a surface therof intended for fastening the layer of plastics 14, in order to facilitate adhesion of the layer 14.

A mold 22 is also prepared, having a surface 24 so shaped to define a series of cavities 26 each of which is adapted to delimit one of the projections 18, 18a or 18b (only a cavity 26 whose shape corresponds to a projection 18 being shown as an example in the figures).

Then, a layer of plastics 14 is laid off on the shaped surface 24 in such a manner to fill completely the cavities 26 and to leave a thickness of the material 14 standing on the surface 24 in order to form the relatively thin and substantially flat base portion 16 of the layer of plastics 14.

Then, the support body 12 or 12a is applied on the layer 14, on the side of its face covered by the primer 20.

Then, the mold 22 with the layer 14 and the body 12 or 12a superimposed to it, undergoes a stoving cycle in a furnace during which the layer 14 polymerizes and reaches a condition of a permanent connection with the support body 12 or 12a.

As a result of the separation of the mold 22, after a cooling step, the shock-resistant and/or antislip member 10 or 10a is obtained, which is provided with a series of projections whose shape correspond to that of the cavities 26, which extend from the layer of plastics 14.

According to an alternative method, a metallic sopport body 12 or 12 a is prepared, on one surface of which, intended to receive the layer of plastics 14, a layer of primer 20 is applied. Then, the body 12 or 12a is heated together with the primer 20, after that, a flat and even layer of plastic material 14 is laid off on the surface thereof provided with the primer 20.

Then, the body 12 or 12a with the layer 14 superimposed to it, undergoes a stoving cycle in a furnace until the polymerization of the layer 14, and therefore a permanent connection with the body 12 or 12a, is reached.

A mold 22 provided with a shaped surface having a series of cavities 26 whose shape correspond to the projections to be formed in the layer 14, is applied on the layer 14 and it undergoes a compression action during the execution of a hot molding step of the layer 14, so as to form in it the projections 18, 18a or 18b. During this molding step, the mold 22 is kept at a preset distance from the body 12 or 12a, so that a space is defined between the body 12 or 12a and the surface 24 of the mold 22, in which a predetermined thickness of the plastics 14 is received so as to form the thin base portion 16 of the layer 14.

As a result of the separation of the mold 22 with respect to the layer 14, which is performed after a cooling step, the shock-resistant and/or antislip member 10 or 10a is obtained.

The projections of the layer 14 and the shape of the elements 10 and 10a may be different from those shown in the figures, in order to have an optimal configuration for satisfying specifical use requirements.

## Claims

1. Shock-resistant and/or antislip member, particularly for structures for supporting parts or for covering walking areas, comprising:
- a support body (12; 12a), and
- a layer of substantially elastic plastics (14) applied to a surface of the support body (12; 12a),
**characterized in that** the layer of plastics (14) has a shaped outer surface which includes a relatively thin base portion (16), from which a series of projections (18; 18a; 18b) protrude.

2. Member according to claim 1, **characterized in that** the plastics of said layer (14) is a vinylic material, preferably a PVC based material.

3. Member according to claim 1 or 2, **characterized in that** the overall thickness of the layer of plastics (14) is higher than the thickness of the portion of the support body (12; 12a) on which it is applied.

4. Member according to claim 3, **characterized in that** said projections (18; 18a; 18b) extend with a thickness higher than the thickness of the base portion (16) of the layer of plastics (14).

5. Member according to any one of claims 1 to 4, **characterized in that** said projections (18) are disc-shaped elements, and **in that** they are ordered in rows.

6. Member according to any one of claims 1 to 4, **characterized in that** said projections (18a) are bar-shaped element with their ends rounded off, and **in that** they are arranged parallel.

7. Member according to any one of claims 1 to 4, **characterized in that** said projections (18b) are V-shaped elements with their ends and their apexes rounded off, whose branches (19) consist of two diverging bars, and **in that** the branches (19) of the projections (18b) are arranged parallel with respect to the branches (19) of the adjacent projections (18b).

8. Member according to any one of claims 1 to 7, **characterized in that** the support body consists of a flat metallic sheet (12) having a substantially even thickness.

9. Member according to any one of claims 1 to 7,
**characterized in that** the support body consists of a flat metallic sheet (12) provided with a series of holes or slots, preferably a stretched sheet.

10. Member according to any one of claims 1 to 7, **characterized in that** the support body is a preferably metallic box section (12a), having a generally rectangular cross-section.

11. Member according to any one of claims 1 to 10, **characterized in that** it is intended to be applied on members of a pallet structure for carrying parts.

12. Member according to any one of claims 1 to 10, **characterized in that** it is intended to be applied on work bench structures for resting parts.

13. Member according to any one of claims 1 to 10, **characterized in that** it is intended to be used for covering walking areas such as floors.

14. Method for manufacturing a shock-resistant and/or antislip member according to any one of claims 1 to 13, **characterized in that** it comprises the following operations:
- preparing a support body (12; 12a) of metallic material,
- applying a layer of primer (20) to a surface of the support body (12; 12a),
- preparing a mold (22) provided with a shaped surface (24) having a series of cavities (26),
- applying a layer of plastics (14) on the mold (22), by filling the cavities (26) of the mold (22) and by leaving a thickness of plastics which overlaps the mold (22) in order to constitute a relatively thin and substantially flat base portion (16) of the layer of plastics (14),
- coupling the support body (12; 12a) with the layer of plastics (14) at the side thereof provided with the layer of primer (20),
- subjecting the mold (22) together with the layer of plastics (14) and the support body (12; 12a) to a stoving cycle in a furnace until the layer of plastics (14) is permanently connected with the support body (12; 12a), and
- separating the mold (22) from the shock-resistant and/or antislip member (10; 10a) so formed, after a cooling step.

15. Method for manufacturing a shock-resistant and/or antislip member according to any one of claims 1 to 13,
**characterized in that** it comprises the following operations:
- preparing a support body (12; 12a) of metallic material,
- applying a layer of primer (20) to a surface of the support body (12; 12a),
- heating the support body (12; 12a) together with the primer (20),
- applying a substantially flat and even layer of plastics (14) on the support body (12; 12a),
- subjecting the support body (12; 12a) with the layer of plastics (14) superimposed to it, to a stoving cycle in a furnace until the layer of plastics (14) is permanently connected with the support body (12; 12a),
- preparing a mold (22) provided with a shaped surface (24) having a series of cavities (26),
- subjecting the layer of plastics (14) to a hot compression molding step using said mold (22), leaving a space interposed between the support body (12; 12a) and the mold (22) in order to receive a predetermined thickness of such a plastics (14) so that a relatively thin and substantially flat base portion (16) of the layer of plastics (14) is formed, and
- separating the mold (22) from the layer of plastics (14) of the shock-resistant and/or antislip member (10; 10a) so formed, after a cooling step.
